# EUROPÄISCHE PATENTANMELDUNG

(11) **EP 2 557 061 A2**
(43) Veröffentlichungstag der Anmeldung: **13.02.2013**
(21) Anmeldenummer: 12179607.2
(22) Anmeldetag: 08.08.2012
(51) Int. Cl.: B65H 54/52, B65H 59/38, B65H 54/20

(54) **Spulmaschine und Verfahren zur Steuerung derselben**

(30) Priorität: 12.08.2011 DE 102011052699
(71) Anmelder: GEORG SAHM GMBH & CO. KG, D-37269 Eschwege (DE)
(72) Erfinder: Görke, Carsten, 37290 Meißner-Germerode (DE)
(74) Vertreter: Rehberg Hüppe + Partner

(57) **Zusammenfassung**

Die Erfindung betrifft ein Verfahren zur Steuerung einer Spulmaschine (1), bei welcher ein paralleles Aufwickeln von kontinuierlich zulaufendem Spulgut (2a, 2b) zu zumindest zwei auf einer gemeinsamen Spindel (18) gelagerten Spulen (3a, 3b) erfolgt. Erfindungsgemäß wird ein Steuersignal erzeugt, mittels dessen Aktuatoren (20, 21) beaufschlagt werden. Die Aktuatoren (20, 21) verändern in Abhängigkeit des Steuersignals die Anpresskraft einer Anpresswalze (13) an mindestens eine Spule (3a, 3b).

Erfindungsgemäß ist das Steuersignal und damit die Anpresskraft der Anpresswalze (13) an die Spulen (3a, 3b) abhängig von der Spannung des Spulguts (2a, 2b) oder einer Auslenkung einer Tänzerrolle (8a, 8b), sodass mit einer Veränderung der Spannung des Spulguts (2a, 2b) oder einer Auslenkung einer Tänzerrolle (8a, 8b) eine Veränderung der Anpresskraft herbeigeführt wird. Hierdurch kann (zusätzlich zu einer Steuerung der Drehzahl der Spindel (18)) eine Beeinflussung der Spannung des Spulguts (2a, 2b) erfolgen.

## Beschreibung

### TECHNISCHES GEBIET DER ERFINDUNG

Die Erfindung betrifft ein Verfahren zur Steuerung einer Spulmaschine, bei welchem ein kontinuierlich zulaufendes Spulgut, insbesondere ein Faden, ein Band, ein Draht, ein Zwirn etc., zu zwei oder mehr Spulen aufgewickelt wird, die auf einer gemeinsamen Spindel gelagert sind. Weiterhin betrifft die Erfindung eine Spulmaschine, mit welcher ein paralleles Aufwickeln eines kontinuierlich zulaufenden Spulguts zu mehreren Spulen erfolgt.

### STAND DER TECHNIK

Bei bekannten Spulmaschinen wird ein kontinuierliches Spulgut von einer Bereitstellungsstation, welche insbesondere unmittelbar mit der Herstelleinrichtung für das Spulgut oder einer Vorratseinrichtung für das Spulgut gebildet ist, über einen Zuführweg in der Spulmaschine einer Spulstation zugeführt, wo das Spulgut mit oder ohne Hülse zu einer auf einer Spindel gelagerten Spule verarbeitet wird. Während des Aufwickelns wird das Spulgut auf dem Zuführweg durch eine Changiereinrichtung parallel zu der Spindel hin- und herbewegt, wodurch eine räumliche Spule gebildet wird. Um einen gleichbleibenden Abstand zwischen der Mantelfläche der Spule und der Changiereinrichtung auch bei zunehmendem Durchmesser der Spule zu gewährleisten, erfolgt die Abstützung der Changiereinrichtung über eine Anpresswalze an der Mantelfläche der Spule. Mit Veränderung des Durchmessers der Spule kann die erforderliche Relativbewegung zwischen der Anpresswalze und der Rotationsachse der Spule entweder herbeigeführt werden, indem die Anpresswalze mit Changiereinrichtung bewegt wird mit ortsfester Rotationsachse der Spule, oder indem die Anpresswalze mit Changiereinrichtung ortsfest angeordnet ist, aber die Rotationsachse der Spule verlagert wird. Um eine gleichmäßige Anpresskraft der Anpresswalze über die gesamte Längserstreckung der Mantelfläche der Spule herbeizuführen, besitzt diese eine Orientierung parallel zur Spindel. Die Anpresswalze dient auch dem Anpressen des neu zulaufenden Spulguts auf die Mantelfläche der Spule. Die Packungsdichte der so erstellten Wicklung der Spule ist abhängig von der Anpresskraft der Anpresswalze. Die Spulen dienen nach Fertigstellung beispielsweise dem Transport, der Bevorratung und/oder der Weiterverarbeitung des Spulguts.

Wird das Spulgut von der Bereitstellungsstation mit einer anderen Geschwindigkeit zugeführt als dieses von der Spulmaschine im Bereich der Spule aufgewickelt oder abgenommen wird, führt dies zu einer Veränderung der Länge des Spulguts in dem Zuführweg. Der Grund für Unterschiede der Zuführgeschwindigkeit und der Abnahmegeschwindigkeit kann bspw. in einer veränderten Zuführgeschwindigkeit des Spulguts von der Bereitstellungsstation, beispielsweise infolge eines hinsichtlich der Ausbringung schwankenden Herstellungsprozesses des Spulguts, und/oder einer veränderten Abnahmegeschwindigkeiten bei der Spule, beispielsweise infolge von Wickelfehlern des Spulguts, Durchmesserschwankungen der Wicklung und Durchmesserschwankungen des Spulguts selbst liegen. Die Veränderung der Länge des Spulguts in dem Zuführweg kann eine Veränderung der Spannung in dem Spulgut zur Folge haben. Insbesondere zum Aufwickeln von empfindlichem Spulgut und/oder zum Aufbau gleichmäßiger Spulen, welche ein gutes Abspulverhalten aufweisen, ist es aber gewünscht, das Spulgut mit einer möglichst gleichmäßigen Spannung aufzuwickeln. Für andere Anwendungen ist eine Änderung der Spannung des Spulguts während der Spulreise entsprechend einem vorgegebenen Spannungsverlauf gewünscht. Dies erfordert geeignete Maßnahmen, um einer veränderten Spannung des Spulguts oder einer Abweichung einer Spannung des Spulguts von dem vorgegebenen Spannungsverlauf entgegenzuwirken.

Eine bekannte Maßnahme zur Beeinflussung der Spannung in dem Spulgut ist aus EP 1 190 974 B1 bekannt. Bei der in diesem Patent beschriebenen Spulmaschine wird das Spulgut auf dem Zuführweg über eine im Wesentlichen ortsfeste Umlenkrolle geführt, welche über eine Abstützeinrichtung an einem Maschinenrahmen abgestützt ist. Die Abstützeinrichtung verfügt über einen Sollbiegebereich, im Bereich dessen ein als Dehnungsmessstreifen ausgebildeter Sensor die Spannung des Spulguts erfasst. Das Ausgangssignal des Sensors wird einer Steuereinheit zugeführt, welche einen Antrieb für die Spindel regelt. In der Steuereinheit können Tabellen oder Kennfelder abgelegt sein, welche eine Änderung eines Steuersignals für den Antrieb der Spindel in Abhängigkeit der Abnahme oder Zunahme einer Spannung des Spulguts abbilden. Die Steuerung des Antriebs erfolgt derart, dass einer veränderten Spannung des Spulguts entgegengewirkt wird durch Veränderung der Abnahmegeschwindigkeit des Spulguts an der Spule infolge einer Veränderung der Drehzahl der Spule. Mit der Spulmaschine erfolgt das parallele Wickeln von fünf Spulen, die jeweils über eine Spindel an dem Maschinenrahmen gelagert sind. Das Patent beschreibt vielfältige unterschiedliche Möglichkeiten zur konstruktiven Ausbildung der Abstützeinrichtung mit dem integrierten Sensor und zur Beeinflussung der Messgenauigkeit des Sensors.

Eine alternative oder kumulative Möglichkeit für eine Beeinflussung der Spannung in dem Spulgut ist bekannt aus dem Patent DE 37 23 593 C1. Diese Patent beschreibt eine Kreuzspulmaschine, bei welcher im Laufe der Spulreise die Spannung des Spulguts mit wachsendem Durchmesser der Wicklung automatisch vergrößert werden soll. Hierzu wird mit sich vergrößerndem Durchmesser der Mantelfläche der Spule eine Anpresswalze mit einem Schwenkrahmen verschwenkt. Die Schwenkbewegung des Schwenkrahmens betätigt einen Hebeltrieb, über welchen ein Federfußpunkt einer Feder verstellt werden kann, deren anderer Federfußpunkt mit einem verschwenkbaren Tänzerarm einer Tänzerrolle gekoppelt ist. Über einen Sensor wird der Schwenkwinkel des Tänzerarms erfasst, wobei dieser als berührungslos arbeitender Näherungsschalter ausgebildet ist, welcher die Entfernung zu einer mit dem Tänzerarm verschwenkten Nockenscheibe erfasst. Über eine Steuereinheit, hier mit einem Differenzierglied und einem Integralglied, wird die Spannung, mittels welcher der Antrieb der Spindel angesteuert wird, so gesteuert, dass der Tänzerarm möglichst eine konstante Schwenkstellung behält. Letztendlich hat diese Steuerung zur Folge, dass mit der Vergrößerung des Durchmessers der Mantelfläche der Wicklung, mit dem Verschwenken des Schwenkrahmens, mit der Betätigung des Hebeltriebs und mit der Verstellung des Federfußpunkts eine gezielte Veränderung der Spannung in dem Spulgut herbeigeführt werden kann, wobei die Änderungscharakteristik abhängig ist von der Kinematik mit dem Schwenkrahmen, dem Hebeltrieb und die Kopplung über die Feder mit dem Tänzerarm.

Gemäß EP 1 190 974 B1 hat eine zu langsame oder unpräzise Steuerung der Antriebsdrehzahl der Spule zur Folge, dass sich entsprechend dem Unterschied der Zuführgeschwindigkeit des Spulguts über die Bereitstellungsstation und der Abnahmegeschwindigkeit des Spulguts durch die Spule eine veränderte Länge des Spulguts in dem Zuführweg sowie eine damit einhergehende veränderte Dehnung des Spulguts ergibt. Die veränderte Dehnung hat in Abhängigkeit von der Längssteifigkeit des Spulguts unmittelbar eine Änderung der Spannungsänderung in dem Spulgut zur Folge, sodass für diese Ausführungsform die Schwankungen der Spannung in dem Spulgut unmittelbar von der Güte der Steuerung der Drehzahl der Spindel abhängig ist. Hingegen ermöglicht die aus DE 37 23 593 C1 bekannte Ausführungsform auch bei einer ungenauen Steuerung der Antriebsdrehzahl der Spule eine Aufnahme und einen Ausgleich einer gewissen Änderung der Länge des Spulguts in dem Zuführweg durch eine Ausgleichsbewegung der Tänzerrolle, wodurch unerwünschte Spannungsänderungen zumindest vermindert sind.

Die vorgenannten Maßnahmen zur Beeinflussung der Spannung in dem Spulgut sind in den genannten Druckschriften beschrieben für die Abnahme des Spulguts mit einer einzigen auf einer Spindel gelagerten Spule. Nicht oder nur begrenzt möglich ist das Konstanthalten der Spannung durch die Steuerung der Antriebsdrehzahl der Spule in dem Fall, dass auf einer Spindel gemeinsam zwei (oder mehr) Spulen gelagert sind, welche sich gemeinsam drehen und parallel gewickelt werden. Ein Ausgleich einer veränderten Spannung des Spulguts ist in diesem Fall durch die Steuerung der Antriebsdrehzahl der Spulen nur möglich, wenn sich für beide Zuführwege zu den Spulen hinsichtlich Betrag und Richtung dieselbe Änderung der Spannung des Spulguts ergibt. Tatsächlich kann es aber durchaus zu unterschiedlichen Spannungen und Spannungsänderungen auf den beiden parallelen Zuführwegen kommen. Würde in diesem Fall eine Anpassung der Drehzahl einer Spule erfolgen, um einer Veränderung des Spulguts in dem Zuführweg zu dieser Spule entgegenzuwirken, hätte das unmittelbar zur Folge, dass sich auch die Spannung in dem Spulgut auf dem Zuführweg zu der anderen Spule ändert, was unerwünscht sein kann. Hier schafft begrenzt Abhilfe der Einsatz von Tänzerrollen jeweils auf den Zuführwegen des Spulguts zu den Spulen, welche individuell in den Zuführwegen eine Änderung der Länge des Spulguts aufnehmen können. Allerdings führt die Verschwenkung des Tänzerarms gegen die Beaufschlagung einer Feder u. U. auch zu einer Veränderung der Spannung des Spulguts. Dieser unerwünschte Effekt kann bspw. beseitigt werden, indem die Tänzerrolle über einen Pneumatikzylinder mit einem Freiheitsgrad in Richtung der Wirkrichtung des Pneumatikzylinders abgestützt ist. Der Pneumatikzylinder kann dann auf einen konstanten Druck geregelt werden, der eine konstante Spannung des Spulguts unabhängig von der Auslenkung der Tänzerrolle zur Folge hat. In jedem Fall kommt es aber zu einer Änderung der Spannung des Spulguts, wenn die maximal über eine Tänzerrolle aufnehmbare Länge des Spulguts überschritten wird und die Tänzerrolle an einen Anschlag kommt, womit keine weitere Ausgleichsbewegung mehr möglich ist.

Aus DE 27 21 972 A1 sind ein Verfahren und eine Vorrichtung zum Aufwickeln eines Fadens auf eine Spule bekannt, wobei die Aufwickelgeschwindigkeit, mit der der Faden auf die Spule aufgewickelt wird, einstellbar ist. Die Spule wird dabei von einer dort als Treibwalze bezeichneten Anpresswalze angetrieben, wobei entweder die Spule oder die Anpresswalze zylinderförmig und umgekehrt die Anpresswalze oder die Spule konisch oder bikonisch ausgebildet sind. Die Spule ist relativ zu der Anpresswalze verschwenkbar. Hierdurch kann ohne Veränderung der gemittelten Gesamt-Anpresskraft der Verlauf des Anpressdrucks zwischen der Spule und der Treibwalze variiert werden, wodurch je nach Verlauf des Anpressdrucks die Aufwickelgeschwindigkeit vergrößert oder verkleinert werden soll. Als Regelgröße für das Ausmaß und die Richtung der Verschwenkung kann hier die Fadenspannung des zulaufenden Fadens dienen. Bei dem Antrieb mehrerer Spulen durch eine einzige Anpresswalze ist die separate Verschwenkung jeder Spule erforderlich.

In DE 25 13 981 A1 sind ein Verfahren und eine Vorrichtung zum Steuern und/oder Regeln der Fadenspannung beim Wickeln eines Fadens auf eine Spule offenbart. Die Fadenspannung wird hierbei fortlaufend abgetastet und nach Maßgabe einer Sollwertabweichung dadurch geregelt, dass die Spule relativ zu einer dort als Wickelwalze bezeichneten Anpresswalze, die mit der Spule entlang einer Berührungslinie in Kontakt ist und von der die Spule angetrieben wird, verschwenkt wird. Indem die Anpresswalze dabei konisch ausgebildet ist, vergrößert sich mit der Verschwenkung der Anpressdruck der Spule auf die Anpresswalze zum einen oder anderen Ende ihrer Berührungslinie hin. Da die Spule von der Anpresswalze im Bereich des größeren Anpressdrucks angetrieben wird, ändert sich mit der Verschwenkung auch die Umfangsgeschwindigkeit der Spule und damit die Aufwickelgeschwindigkeit des Fadens, sodass sich die Fadenspannung wieder dem Sollwert annähert.

Bei der aus US 4,184,646 bekannten Spulmaschine wird eine Änderung der Fadenspannung eines zulaufenden Fadens über einen Dehnungsmessstreifen registriert. Auf Grundlage des Signals des Dehnungsmessstreifens wird ein Steuersignal für einen Aktuator, der eine Spule relativ zu einer Anpresswalze verschwenkt, generiert. Durch das Verschwenken der Spule wird der Anpressdruck der von der Anpresswalze angetriebenen Spule auf die Anpresswalze variiert, sodass sich die Aufwickelgeschwindigkeit vergrößert oder verringert und die Fadenspannung um einen vorbestimmten Wert geregelt werden kann.

Gemäß den Druckschriften DE 27 21 972 A1, DE 25 13 981 A1 und US 4,184,646 erfolgt eine Beeinflussung der Fadenspannung über eine mittelbare Regelung der Drehzahl der Spule: Der Antrieb der Anpresswalze erfolgt über einen Motor mit einer Antriebsdrehzahl n₁, wobei die Anpresswalze über einen Friktionsantrieb mit einer Übersetzung i, der von dem Reibkontakt zwischen der Mantelfläche der Antriebswalze und der Mantelfläche der Spule gebildet ist, die Spule zu einer Drehzahl n₂ = i x n₁ antreibt. Hierbei wird die Drehzahl der Spule n₂ geregelt über eine Veränderung der Übersetzung i des Friktionsantriebs. Die Veränderung der Übersetzung i des Friktionsantriebs kann über zwei unterschiedliche Mechanismen erfolgen:
a) Mit einer Variation der Anpresskraft zwischen Anpresswalze und Spule kann der Schlupf zwischen Anpresswalze und Spule verändert werden. Eine Variation des Schlupfes ist aber u. U. unerwünscht, da insbesondere ein Erhöhung des Schlupfes zu undefinierten Antriebszuständen der Spule führen kann, was bspw. eine Verringerung der Präzision der erstellten Wicklung zur Folge hat.
b) Bei konischer Ausbildung der Spule oder der Anpresswalze kann eine Verschwenkung der Spule oder der Anpresswalze dazu führen, dass sich der Reibkontakt zwischen Spule und Anpresswalze mit minimalem oder verschwindendem Schlupf zu einem veränderten Durchmesser der konischen Spule oder der konischen Anpresswalze verschiebt. Dies setzt aber zwingend den Einsatz einer konusförmigen Spule oder Anpresswalze voraus.

Kurz zusammengefasst offenbart der letztgenannte Stand der Technik zur Steuerung einer Fadenspannung somit insbesondere eine unmittelbare Steuerung der Drehzahl einer Spule oder aber die mittelbare Steuerung der Drehzahl einer Spule durch eine Veränderung einer Übersetzung i eines Friktionsantriebs zwischen einer angetrieben Antriebswalze und einer hiervon über den Friktionsantrieb angetriebenen Spule.

### AUFGABE DER ERFINDUNG

Der Erfindung liegt die Aufgabe zugrunde, ein Verfahren zur Steuerung einer Spulmaschine vorzuschlagen, welches erweiterte oder alternative Möglichkeiten für ein Beeinflussen der Spannung in dem Spulgut und/oder für ein Beeinflussen einer Auslenkung einer Tänzerrolle bei einem parallelen Aufwickeln von kontinuierlich zulaufendem Spulgut zu (zumindest) zwei auf einer gemeinsamen Spindel gelagerten Spulen bietet. Des Weiteren liegt der Erfindung die Aufgabe zugrunde, eine Spulmaschine vorzuschlagen, welche eine verbesserte Steuerung der Spannung des Spulguts und/oder der Auslenkung einer Tänzerrolle bei dem parallelen Aufwickeln kontinuierlich zulaufenden Spulguts zu Spulen ermöglicht.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der vorliegenden Erfindung liegt die Erkenntnis zugrunde, dass die aus dem Stand der Technik bekannten Maßnahmen zur Steuerung der Spannung des Spulguts dem Vorurteil folgen, dass eine Beeinflussung der Spannung des Spulguts ausschließlich erfolgen kann, indem eine Tänzerrolle eingesetzt wird und/oder die Steuerung der Drehzahl der Spule erfolgt. Die Erfindung schlägt abweichend zu diesem Vorurteil vor, eine weitere alternative oder kumulative Maßnahme zur Beeinflussung der Spannung des Spulguts zu nutzen:

Entsprechend einem erfindungsgemäßen Vorschlag erfolgt ein paralleles Aufwickeln von kontinuierlich zulaufendem Spulgut zu zwei (oder mehr) auf einer gemeinsamen Spindel gelagerten, gemeinsam von der Spindel angetriebenen und gemeinsam mit derselben 'Drehzahl rotierenden Spulen. Hierbei ist mit einem "parallelen Aufwickeln" gemeint, dass die Spulen gleichzeitig gewickelt werden, wobei dies nicht bedeuten soll, dass hierbei das Spulgut geometrisch parallel den Spulen zugeführt wird.

In dem erfindungsgemäßen Verfahren wird (mindestens) ein Steuersignal erzeugt, mit dem (mindestens) ein Aktuator beaufschlagt wird. Hierbei kann es sich um einen beliebigen Aktuator, insbesondere ein elektrisches Stellaggregat, einen pneumatischen oder einen hydraulischen Aktuator handeln. Der Aktuator verändert in Abhängigkeit des (mindestens) einen Steuersignals die Anpresskraft (mindestens) einer Anpresswalze an (mindestens) eine Spule. Hierbei kann lediglich die Anpresskraft einer Anpresswalze an eine Spule verändert werden, während eine Anpresskraft einer anderen Anpresswalze unverändert bleibt. Ebenfalls möglich ist eine gemeinsame Veränderung der Anpresskraft mindestens einer Anpresswalze an mehrere Spulen. Dem Fachmann wird ersichtlich sein, dass die Anpresskraft entsprechend der Packungsdichte und der radialen Steifigkeit der Wicklung der Spule korreliert mit dem Abstand der Anpresswalze von der Rotationsachse der Spule. Von der Erfindung ist somit auch eine Ausführungsform umfasst, bei welcher der Aktuator auf einen sich vergrößernden oder verkleinernden Abstand der Anpresswalze von der Rotationsachse der Spule gesteuert wird anstelle auf eine sich vergrößernde oder verkleinernde Anpresskraft der Anpresswalze an die Spule. Des Weiteren kann die Kraft des mindestens einen Aktuators unmittelbar die Anpresskraft beeinflussen oder der Anpresskraft entsprechen. Ebenfalls möglich ist, dass der Aktuator nur eine Komponente der Anpresskraft bereitstellt, während eine andere Komponente durch anderweitige Maßnahmen bereitgestellt wird, also bspw. durch einen weiteren Aktuator und/oder eine Gewichtskraft der Anpresswalze und des Fadenleitwerks. Für eine besondere Ausgestaltung ist der Aktuator zur individuellen Veränderung der Anpresskraft für das jeweilige Wickeln mindestens einer Spule gegenüber einem vorgegebenen (mittleren oder normalen) Anpresskraftverlauf zuständig, während der vorgegebene (mittlere oder normale) Anpresskraftverlauf über die Gewichtskraft von Fadenleitwerk und Anpresswalze und/oder einen weiteren Aktuator gewährleistet wird. Schließlich ist auch möglich, dass über den mindestens einen Aktuator auch nur ein veränderter Anpresskraftverlauf mit einer unveränderten Gesamt-Anpresskraft herbeigeführt wird.

Erfindungsgemäß wird eine unmittelbar oder mittelbar erfasste Spannung des Spulguts nicht (ausschließlich) genutzt, um die Position einer Tänzerrolle zu verändern und/oder die Antriebsdrehzahl der Spule zu steuern. Vielmehr wird erfindungsgemäß das (mindestens) eine Steuersignal in Abhängigkeit der Spannung des Spulguts, insbesondere der Spannung des Spulguts in einem Zuführweg zu einer Spule oder zu beiden Spulen, ermittelt. Über dieses Steuersignal wird dann die Beaufschlagung des Aktuators, also auch die Anpresskraft beeinflusst. Alternativ oder zusätzlich wird das mindestens eine Steuersignal in Abhängigkeit mindestens einer Auslenkung einer Tänzerrolle ermittelt.

Erfindungsgemäß erfolgt mit einer Veränderung der Spannung des Spulguts oder der Auslenkung der Tänzerrolle durch das Einwirken des geänderten Steuersignals auf den Aktuator eine Veränderung der Anpresskraft. Um lediglich ein Beispiel zu nennen, kann mit einer Vergrößerung der Spannung des Spulguts eine Vergrößerung der Anpresskraft erfolgen. Die Vergrößerung der Anpresskraft hat zur Folge, dass sich die Packungsdichte der Wicklung (geringfügig) verändert, was zur Folge hat, dass sich der Radius R der Mantelfläche der Spule zumindest an der Stelle, an welcher das Spulgut auf die Spule aufgewickelt wird, verringert. Somit wird (unter der vereinfachenden Annahme einer gleichbleibenden Winkelgeschwindigkeit ω der Spule) das Spulgut mit einer verringerten Abnahmegeschwindigkeit ωR abgenommen, womit der vergrößerten Spannung des Spulguts entgegengewirkt werden kann. Entsprechendes gilt umgekehrt für eine Verringerung der Spannung des Spulguts mit einer hierdurch angesteuerten Verringerung der Anpresskraft. Ebenso kann einer vergrößerten Auslenkung einer Tänzerrolle entgegengewirkt werden, indem die Anpresskraft der Anpresswalze erhöht wird.

Die erfindungsgemäße Beeinflussung der Spannung des Spulguts und/oder der Auslenkung der Tänzerrolle kann allein durch die erläuterte Veränderung der Anpresskraft erfolgen oder alternativ oder kumulativ auch durch eine Beeinflussung der Drehzahl der Spule erfolgen. Hierbei kann auch eine unterschiedliche Anpresskraft an den parallel gewickelten Spulen ausgesteuert werden, womit ein Ausgleich von unterschiedlichen Spannungen von Spulgut oder unterschiedlichen Auslenkungen von Tänzerrollen auf den beiden parallelen Zuführwegen erfolgen kann.

Erfindungsgemäß wird die Spannung in dem Spulgut und/oder die Auslenkung der Tänzerrolle auf dem Zuführweg des Spulguts zu einer oder separat zu mehreren Spulen erfasst und verarbeitet. Für die Erfassung der Spannung und/oder die Auslenkung der Tänzerrolle in dem Spulgut gibt es vielfältige beliebige, dem Fachmann bekannte unterschiedliche Möglichkeiten.

Erfindungsgemäß ist sind die Spulen über die Spindel angetrieben, während für den eingangs genannten Stand der Technik ein Friktionsantrieb für den Antrieb der Spule verwendet wird. Bei Spulmaschinen oder Spulverfahren mit einem Friktionsantrieb erfolgt die Wicklung des Spulguts auf die Spule üblicherweise gemäß einer sogenannten "Wilden Wicklung". Grund hierfür ist, dass durch den Friktionsantrieb die Umfangsgeschwindigkeit der Spule von der Anpresswalze vorgegeben wird. Die Umfangsgeschwindigkeit der Spule bleibt mit zunehmendem Spulenradius bei konstanter Antriebsdrehzahl des Friktionsantriebs (abgesehen von einem etwaigen Schlupf) konstant. Damit bleiben die Fadengeschwindigkeit und die Geschwindigkeit bei unveränderter Changierbewegung im gleichen Verhältnis zueinander, sodass sich der Verlegewinkel des Spulguts auf der Spule nicht ändert. Hingegen ändert sich aber aufgrund des zunehmenden Radius das Übersetzungsverhältnis. Folge hiervon ist, dass sich die Zahl der Wicklungen in einer Lage während der Spulreise ändert. Neben Wicklungen vom Typ "Wilde Wicklung" sind auch Wicklungen ist vom Typ "Präzisionswicklung" bekannt. Die "Präzisionswicklung" wird beispielsweise erreicht, wenn die Spule auf einer Spindel gelagert ist und von dieser Spindel angetrieben wird. Im Gegensatz zu der "Wilden Wicklung" wird bei der "Präzisionswicklung" nicht die Umfangsgeschwindigkeit der Spule konstant gehalten, sondern deren Winkelgeschwindigkeit. Bei konstanter Antriebsdrehzahl nimmt also mit zunehmendem Spulenradius die Umfangsgeschwindigkeit der Spule zu. Da die Umfangsgeschwindigkeit der Spule zunimmt, ändert sich aber auch das Verhältnis der Fadengeschwindigkeit zu der Geschwindigkeit einer in diesem Fall unveränderten Changierbewegung. Dies hat zur Folge, dass sich mit zunehmendem Spulenradius der Verlegewinkel des Spulguts verringert. Gleichzeitig wird aber erreicht, dass das Übersetzungsverhältnis konstant bleibt, da der Spulenumfang gleichermaßen mit der Zunahme der Umfangsgeschwindigkeit der Spule zunimmt. Anders als bei der "Wilden Wicklung" werden also trotz eines zunehmenden Spulenradius pro Lage immer gleich viele Wicklungen auf der Spule abgelegt. Durch den erfindungsgemäßen Antrieb der Spulen über die Spindel kann u. U. sowohl eine Herstellung von Spulen in "Wilder Wicklung" als auch in "Präzisionswicklung" erfolgen (wobei die Möglichkeiten für eine Steuerung der Antriebe der Spindel(n) und der Changiereinrichtung(en) vielfältig sind.)

Für eine bevorzugte Weiterbildung des erfindungsgemäßen Verfahrens wird das Steuersignal in Abhängigkeit von der Spannung des Spulguts und/oder in Abhängigkeit einer Auslenkung einer Tänzerrolle durch die Steuerlogik derart ermittelt wird, dass im Fall, dass die Spannung des Spulguts in einem Zuführweg zu einer der Spulen eine gewünschte oder vorbestimmte Spannung überschreitet oder eine Auslenkung einer Tänzerrolle eine gewünschte oder vorbestimmte Auslenkung in einem Zuführweg zu einer der Spulen überschreitet, die Anpresskraft der Anpresswalze an der zugeordneten Spule erhöht wird. Hiermit soll der Radius einer äußeren Oberfläche der zugeordneten Spule an der Stelle, an welcher das Spulgut auf die Spule gewickelt wird, verringert werden. Hierdurch wird eine verringerte Abnahmegeschwindigkeit des Spulguts auch bei unveränderter Winkelgeschwindigkeit des Spulguts angestrebt, womit der unerwünschten zu großen Auslenkung oder der zu großen Spannung entgegengewirkt werden kann. Entsprechendes gilt im umgekehrten Fall einer zu kleinen Auslenkung oder zu kleinen Spannung. Hierbei kann der Vergleich der Spannung oder der Auslenkung mit einer vorbestimmten oder gewünschten Spannung oder Auslenkung auf Grundlage absoluter Werte des jeweilige Zuführwegs erfolgen. Ebenfalls möglich ist, dass der Vergleich auf einer relativen Spannung oder Auslenkung in den beiden Zuführwegen basiert. Im einfachsten Fall wird bspw. somit eine zuvor erläuterte Maßnahme ergriffen, wenn die Spannungsdifferenz in den beiden Zuführwegen einen Sollwert über- oder unterschreitet.

Für eine besondere Ausgestaltung der Erfindung erfolgt die Erfassung der Spannung in dem Spulgut durch Abstützung einer Umlenkrolle über eine Abstützeinrichtung. Infolge der Spannung in dem Spulgut wird eine Beanspruchung der Abstützeinrichtung erzeugt, welche über einen geeigneten Sensor erfasst wird. Beispielsweise kann im Rahmen der Erfindung zur Erfassung der Spannung in dem Spulgut eine Abstützeinrichtung genutzt werden, wie diese in EP 1 190 974 B1 beschrieben ist und bei welcher die Beanspruchung über einen Dehnungsmessstreifen erfasst wird. Eine alternative Abstützeinrichtung, welche im Rahmen der Erfindung zur Erfassung der Spannung in dem Spulgut einsetzbar ist, wird in DE 10 2008 032 643 B3 beschrieben. Es versteht sich, dass die erfindungsgemäße Abstützeinrichtung und der eingesetzte Sensor nicht auf die genannten Beispiele reduziert sind.

Ein Sensor zur Erfassung der Auslenkung einer Tänzerrolle kann einen translatorischen Freiheitsgrades der Tänzerrolle oder einen Schwenkwinkel eines Tänzerarms erfassen, um nur einige Beispiele zu nennen. Es versteht sich, dass in Zuführwegen zu unterschiedlichen Spulen dieselben oder unterschiedliche Sensoren, also bspw. eine Abstützeinrichtung der Umlenkrolle und eine Tänzerrolle, eingesetzt sein können. Auch möglich ist, dass in einem Zuführweg unterschiedliche Umlenkeinheiten mit zugeordneten Sensoren hintereinander angeordnet sind.

Durchaus möglich ist, dass die Drehzahl der Spulen konstant oder entsprechend einem vorgegebenen Kurvenverlauf gestaltet ist. Möglich ist auch eine Steuerung der Drehzahl der Spulen in Abhängigkeit von beliebigen Betriebsparametern, beispielsweise in Abhängigkeit von einer Zuführgeschwindigkeit des Spulguts im Bereich der Bereitstellungsstation. In bevorzugter Ausgestaltung ist die Drehzahl der Spulen (auch) in Abhängigkeit von der Spannung des Spulguts und/oder Auslenkung der mindestens einen Tänzerrolle steuerbar, sodass (alternativ oder kumulativ) zu einer Veränderung der Spannung in dem Spulgut und/oder der Auslenkung der Tänzerrolle über die Steuerung der Anpresskraft die Steuerung über die Drehzahl der Spulen genutzt werden kann. Hierbei erfolgt der Antrieb der parallel gewickelten Spulen mit derselben gesteuerten Drehzahl. Im Rahmen der Erfindung erfolgt ein Antrieb der Spulen über die Spindel.

In bevorzugter Ausgestaltung der Erfindung wird die Drehzahl der Spulen in Abhängigkeit von mehreren Spannungen oder Auslenkungen gesteuert, die jeweils auf parallelen Zuführwegen des Spulguts zu den Spulen erfasst werden.

Für eine weitere Ausführungsform der Erfindung wird die Drehzahl der Spulen in Abhängigkeit eines Mittelwerts von Spannungen oder Auslenkungen gesteuert, die jeweils auf parallelen Zuführwegen des Spulguts zu den Spulen erfasst werden. Dies soll anhand eines einfachen, nicht beschränkenden Beispiels erläutert werden: Befinden sich in beiden Zuführwegen Tänzerarme, welche entsprechend der Spannung oder Länge des Spulguts in diesen Zuführwegen ausgelenkt werden, könnte ein gemeinsames Verschwenken der Tänzerarme ausgeglichen werden über eine reine Veränderung der Drehzahl des gemeinsamen Antriebs für die Spulen. Erfolgt hingegen eine relative Verschwenkung der Tänzerarme der beiden Tänzerrollen, kann diese relative Verschwenkung der Tänzerarme ausgeglichen werden durch eine relative Veränderung der Anpresskräfte der Anpresswalze an die beiden zugeordneten Spulen. Kommt es in einem praktischen Betrieb sowohl zu einer gemeinsamen Bewegungskomponente beider Tänzerrollen als auch zu einer Relativbewegung beider Tänzerrollen, kann diesem entgegengewirkt werden durch kumulative Steuerung
- der Drehzahl der Spulen entsprechend dem Mittelwert der Spannungen, um dem "Gleichanteil" der Spannungsänderungen bzw. der Schwenkwinkel der Tänzerarme in den Zuführwegen entgegenzuwirken, und
- der Anpresskräfte der mindestens einen Anpresswalze, um der relative Spannungsänderung in den Zuführwegen entgegenzuwirken.

Für eine besondere Ausgestaltung der Erfindung finden für zwei (oder mehr) Spulen separate Anpresswalzen Einsatz. Um einen Ausgleich einer Spannung in dem Spulgut in einem Zuführweg herbeiführen zu können, kann dann eine individuelle Veränderung der Anpresskraft einer Anpresswalze an die zugeordnete Spule herbeigeführt werden durch ein Verschieben der Anpresswalze radial zur Rotationsachse der Spule, wobei die andere Anpresswalze ihre relative Lage zu der Spindel nicht zwingend verändert oder aber eine zusätzliche individuelle Verschiebung der anderen Anpresswalze erzeugt werden kann. Auf diese Weise kann individuell auf die Abnahmegeschwindigkeit der der verschobenen Anpresswalze zugeordneten Spule und damit auf die Spannung in dem Spulgut, welches dieser Spule zugeführt wird, und/oder die Auslenkung mindestens einer Tänzerrolle, eingewirkt werden.

Diese Ausgestaltung der Erfindung überträgt eine aus dem Stand der Technik gemäß DE 100 03 513 A1 bekannte konstruktive Ausgestaltung auf einen anderen Einsatz- und Steuerungszweck: DE 100 03 513 A1 beschreibt die Problematik, dass sich bei dem Wickeln mehrerer Spulen auf einer einzigen Spindel mit fortschreitendem Wickelvorgang ein zunehmendes, über die Spindel verteiltes Gewicht ergibt, welches zu einer im Laufe der Spulreise zunehmenden Durchbiegung der Spindel führt. Diese Durchbiegung hat zur Folge, dass die Anpresskraft einer für sämtliche Spulen zuständigen Anpresswalze für die einzelnen Spulen entsprechend der sich einstellenden Biegelinie variiert. Um trotz der sich ergebenden Biegelinie eine möglichst gleichmäßige Anpresskraft an die Spule zu ermöglichen, schlägt DE 100 03 513 A1 vor, anstelle einer durchgehenden Anpresswalze mehrere einzelne, jeweils einer Spule zugeordnete Anpresswalzen zu verwenden, welche jeweils über Aktuatoren radial zur Längsachse der Spindel verstellbar und beaufschlagbar sind, sodass jede Anpresswalze mit derselben Anpresskraft an die Spule angepresst werden kann. Auch erfindungsgemäß kann eine derartige Ausgestaltung mit mehreren Anpresswalzen gemäß DE 100 03 513 A1 genutzt werden, wobei erfindungsgemäß eine gegenüber DE 100 03 513 A1 veränderte Steuerungsstrategie für die Ansteuerung der individuellen Anpresswalzen zugeordneten Aktuatoren genutzt wird: Erfindungsgemäß wird nicht eine möglichst einheitliche Anpresskraft der Anpresswalzen an die Mantelflächen der Spulen ausgesteuert. Vielmehr wird erfindungsgemäß gezielt eine individuelle Vergrößerung oder Verringerung der Anpresskraft erzeugt, um einer veränderten Spannung in dem Spulgut oder einer Auslenkung einer Tänzerrolle entgegenzuwirken.

In besonderer Ausgestaltung des Lösungsgedankens des Einsatzes mehrerer Anpresswalzen erfolgt bei unterschiedlichen Spannungen in den Zuführwegen des Spulguts zu den Spulen eine Angleichung der Spannungen, indem eine Anpresswalze zur Vergrößerung der Anpresskraft und zur Verringerung der Spannung des Spulguts und/oder der Auslenkung einer Tänzerrolle in dem zugeordneten Zuführweg radial zur Rotationsachse der Spindel in Richtung der Spindel bewegt wird, während die andere Anpresswalze zur Verringerung der Anpresskraft und zur Vergrößerung der Spannung des Spulguts und/oder der Auslenkung der Tänzerrolle in dem zugeordneten Zuführweg radial zur Rotationsachse der Spindel von der Spindel weg bewegt wird. Es versteht sich, dass zusätzlich zu diesen Maßnahmen auch noch eine Regelung der Drehzahl der Spulen erfolgen kann.

Für einen alternativen Lösungsgedanken der Erfindung kann eine Veränderung der Anpresskraft herbeigeführt werden, indem durch (mindestens) einen Aktuator eine Veränderung des Winkels der Rotationsachse der Anpresswalze gegenüber der Rotationsachse der Spindel erfolgt. Durch die Veränderung des Winkels der Rotationsachse der Anpresswalze gegenüber der Rotationsachse der Spindel wird die Mantelfläche der Wicklung, zumindest im Anlagebereich der Anpresswalze entsprechend der Mantelfläche eines Kegelstumpfes verformt. Je nach Anlageort des Spulguts an die Mantelfläche dieses Kegelstumpfes tritt eine Veränderung des Durchmessers ein. Hieraus resultiert eine veränderte Abnahmegeschwindigkeit für das Spulgut. Der Öffnungswinkel des Kegelstumpfes hängt ab von dem Winkel der Rotationsachse der Anpresswalze gegenüber der Rotationsachse der Spule. Diese Maßnahme kann Einsatz finden auch für die Nutzung einer separaten Anpresswalze für eine Spule. Vorzugsweise findet diese Ausgestaltung allerdings Einsatz für eine Anpresswalze, welche an die Mantelfläche von zumindest zwei Spulen angelegt wird. Hierbei erfolgt beispielsweise eine Veränderung des Winkels der Anpresswalze derart, dass der größte Durchmesser des Kegelstumpfes einer Spule kleiner ist als der kleinste Durchmesser des Kegelstumpfes der anderen Spule, sodass gezielt unterschiedliche Durchmesser der Spulen und damit Abnahmegeschwindigkeiten für das Spulgut auf den unterschiedlichen Zuführwegen erzielt werden können, die zum Ausgleich unterschiedlicher Spannungen des Spulguts und/oder die Auslenkungen der Tänzerrollen in den Zuführwegen genutzt werden können.

Eine weitere Lösung der der Erfindung zugrundeliegenden Aufgabe ist gegeben durch eine Spulmaschine, mittels welcher ein paralleles Aufwickeln kontinuierlich zulaufenden Spulguts zu mindestens zwei Spulen erfolgt. Die Spulmaschine besitzt eine die Spulen antreibende Spindel mit zumindest zwei Spulstationen, im Bereich welcher jeweils mindestens eine Spule angeordnet ist. Im Bereich der Spulstationen erfolgt das Aufwickeln des Spulguts. Die Spulmaschine besitzt eine für mehrere Spulen zuständige Anpresswalze oder mehrere Anpresswalzen, welche lediglich einer Spule oder Gruppen von Spulen zugeordnet sein kann/können. Die Spulmaschine verfügt weiterhin über mindestens einen Aktuator, welcher über ein Steuersignal ansteuerbar ist. Über den mindestens einen Aktuator ist der Abstand einer der Anpresswalze oder sind Abstände mehrerer Anpresswalzen von der Spindel und/oder sind Anpresskräfte mindestens einer Anpresswalze an die Spulen veränderbar. Erfindungsgemäß ist ein Sensor vorgesehen, über welchen eine Erfassung einer Spannung in dem Spulgut und/oder einer Auslenkung einer Tänzerrolle in einem Zuführweg zu einer zugeordneten Spule erfolgt, wobei auch mehrere Sensoren in den unterschiedlichen Zuführwegen eingesetzt sein können. Die erfindungsgemäße Spulmaschine besitzt darüber hinaus eine Steuereinheit, die mit einer Steuerlogik ausgestattet ist zur Steuerung der Spannung in dem Spulgut und/oder der Auslenkung der Tänzerrolle. Erfindungsgemäß ist die Steuerlogik derart ausgebildet, dass mittels dieser ein von einer Spannung in Spulgut und/oder der Auslenkung der Tänzerrolle abhängiges Steuersignal bestimmbar ist, welches mit der Ansteuerung des Aktuators einer Veränderung einer Spannung in dem Spulgut und/oder der Auslenkung der Tänzerrolle entgegenwirkt, wie dies zuvor beschrieben worden ist.

In weiterer Ausgestaltung der erfindungsgemäßen Spulmaschine ist jeweils ein Sensor in parallelen Zuführwegen von Spulgut zu den Spulstationen zur Erfassung der Spannung in dem Spulgut und/oder der Auslenkung der Tänzerrolle angeordnet.

Während grundsätzlich beliebige Ausbildungen der Sensoren möglich sind, handelt es sich hierbei vorzugsweise um einen Sensor, welcher eine Beanspruchung einer Abstützeinrichtung für eine Umlenkrolle erfasst. Insbesondere erfasst der Sensor eine Dehnung, eine Spannung oder eine Kraft in der Abstützeinrichtung infolge der Beanspruchung durch die Spannung in dem Spulgut. Ebenfalls möglich ist die Nutzung eines Sensors, der die Auslenkung einer Tänzerrolle erfasst.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Aktuator, einer Anpresswalze oder der Auslenkung einer Tänzerrolle die Rede ist, ist dies so zu verstehen, dass genau ein Aktuator, eine Anpresswalze oder eine Auslenkung einer Tänzerrolle, zwei Aktuatoren, Anpresswalzen oder Auslenkungen von Tänzerrollen oder mehr Aktuatoren, Anpresswalzen oder Auslenkungen von Tänzerrollen gemeint sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine erfindungsgemäße Spulmaschine in einer Vorderansicht.
- **Fig. 2**: zeigt schematisch die Spulmaschine gemäß Fig. 1 in einer Teilansicht in Blickrichtung II.
- **Fig. 3**: zeigt die Spulmaschine gemäß Fig. 1 und 2 in einer Draufsicht.
- **Fig. 4**: zeigt stark schematisiert ein erfindungsgemäßes Verfahren.

### FIGURENBESCHREIBUNG

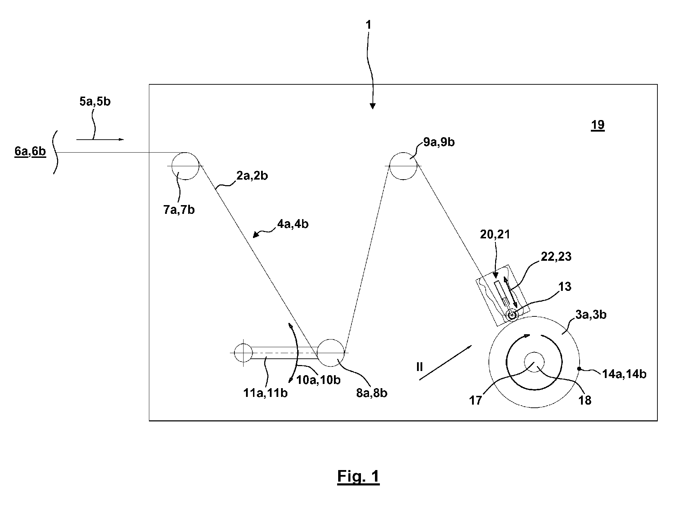

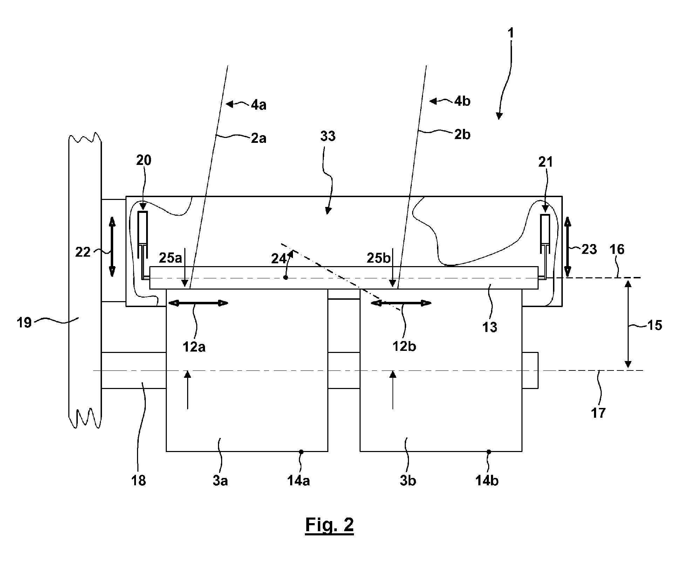

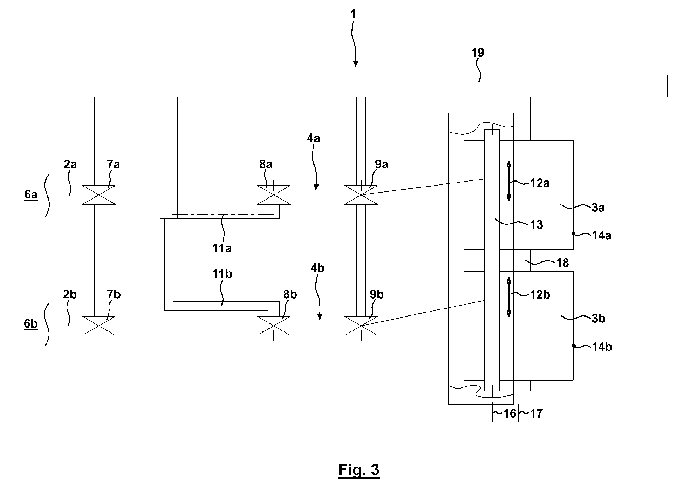

**Fig. 1** zeigt eine Spulmaschine 1. Wie in **Fig. 2** **und** **3** näher zu erkennen ist, erfolgt in der Spulmaschine 1 das parallele Zuführen von Spulgut 2a, 2b zu Spulen 3a, 3b über Zuführwege 4a, 4b, welche in eine Richtung vertikal zur Zeichenebene gemäß Fig. 1 versetzt zueinander angeordnet sind. Vergleichbare Bauelemente in den Zuführwegen 4a, 4b sind in der Beschreibung teilweise mit demselben Bezugszeichen und dem Zusatz eines Buchstabens a bzw. b gekennzeichnet. Es versteht sich, dass auch mehr als die zwei dargestellten parallelen Zuführwege 4a, 4b an einer Spulmaschine 1 eingesetzt sein können.

Der Weg des Spulguts 2a, 2b über die Zuführwege 4a, 4b wird im Folgenden vorrangig anhand des Spulguts 2a über den Zuführweg 4a erläutert, wobei entsprechendes für das Spulgut 2b in dem parallelen Zuführweg 4b gilt:

Das Spulgut 2a verlässt mit einer Abgabegeschwindigkeit 5a, 5b eine in den Figuren nicht näher dargestellte Bereitstellungsstation 6. Über eine erste ortsfeste Umlenkrolle 7a wird das Spulgut 2a in Richtung einer beweglichen Tänzerrolle 8a umgelenkt. Die Tänzerrolle 8a lenkt das Spulgut 2a wiederum um in Richtung einer ortsfesten Umlenkrolle 9a, welche ungefähr in Höhe der Umlenkrolle 7a angeordnet ist. Die Umlenkrolle 9a lenkt das Spulgut 2a wiederum um in Richtung eines in den Zeichnungen nicht näher dargestellten Changierfadenführers. Die Tänzerrolle 8a ist für das dargestellte Ausführungsbeispiel verschwenkbar in Schwenkrichtungen 10a an einem Tänzerarm 11a gehalten. Verringert sich die Länge des Spulguts 2a in dem Zuführweg 4a, führt dies zu einer Verschwenkung des Tänzerarms 11 a entgegen dem Uhrzeigersinn, wobei diese Verschwenkung bedeutet, dass einer Erhöhung der Spannung des Spulguts 2a infolge einer Verringerung der Länge des Spulguts 2a in dem Zuführweg 4a entgegengewirkt wird. (Für den Fall, dass - wie eingangs erwähnt - der Tänzerarm 11 a nicht über eine Feder, sondern über einen auf einen konstanten Druck geregelten Pneumatikzylinder abgestützt ist, korreliert die Veränderung der Auslenkung des Tänzerarms 11a nicht mit einer veränderten Spannung des Spulguts, sondern nur mit einer veränderten Länge des Spulguts 2a im Zuführweg 4a.) Entsprechend führt die Vergrößerung der Länge des Spulguts 2a in dem Zuführweg 4a zu einer Verschwenkung des Tänzerarms 11a im Uhrzeigersinn in Fig. 1.

Über die in den Figuren nicht dargestellte Changiereinrichtung wird eine Changierbewegung 12a herbeigeführt derart, dass sich zwischen der Umlenkrolle 9a und dem Changierfadenführer ein Verlegedreieck ergibt. Von dem Changierfadenführer gelangt das Spulgut 2a zu der Mantelfläche einer Anpresswalze 13, welche an die Mantelflächen 14a, 14b der Spulen 3a, 3b angepresst wird. Nach der Bewegung des Spulguts 2a über einen Teilumfangsbereich mit der Anpresswalze 13 wird das Spulgut 2a vorzugsweise im Kontaktbereich zwischen der Anpresswalze 13 und der Spule 3a an die Mantelfläche 14a der Spule 3a angelegt.

Die Changiereinrichtungen sind vorzugsweise Bestandteil eines gemeinsamen Fadenleit- und Anpresseinheit 33 über die Anpresswalze 13 an den Spulen 3a, 3b abgestützt. Die Spulen 3a, 3b sind auf einer gemeinsamen Spindel 18 gelagert, welche sich vertikal zur Zeichenebene gemäß Fig. 1 erstreckt und an einem Maschinenrahmen 19 gelagert ist, gegenüber welchem auch die Umlenkrollen 7, 9 und die Tänzerarme 11 gelagert sind. Möglich ist, dass die Spindel 18 über einen von einer Steuereinheit 28 angesteuerten Antrieb angetrieben ist und dass die Antriebsbewegung der Spindel 18, beispielsweise über eine Formschluss zwischen der Spindel 18 mit Hülsen der Spulen 3a, 3b, auf die Spulen 3a, 3b übertragen wird. Der Abstand der Fadenleit- und Anpresseinheit 33 von der Rotationsachse 17 vergrößert sich im Laufe der Spulreise mit einer Bewegung entsprechend einer Führungsbahn. Die Fadenleit- und Anpresseinheit 33 wird über Ihre Eigengewicht und/oder über mindestens einen nicht dargestellten Aktuator beaufschlagt zur Erzeugung des Gesamtniveaus der Anpresskraft, welche zwischen der Anpresswalze 13 und den Mantelflächen 14a, 14b der Spulen 3a, 3b wirkt. Mit Vergrößerung des Durchmessers der Mantelflächen 14a, 14b der Spulen 3a, 3b vergrößert sich ein radialer Abstand 15 einer Rotationsachse 16 von einer Rotationsachse 17 der Spulen 3a, 3b.

Die Tänzerarme 11 a, 11 b sind separat voneinander verschwenkbar. Insbesondere aus Fig. 2 und 3 ist zu erkennen, dass die Changiereinrichtungen synchron betrieben werden, also ihre Umkehrpunkte gleichzeitig erreichen.

In Fig. 2 ist zu erkennen, dass die Rotationsachse 16 der Anpresswalze 13 verstellbar ist über Aktuatoren 20, 21, welche Stellbewegungen 22, 23 erzeugen. Für das dargestellte Ausführungsbeispiel sind die Aktuatoren 20, 21 als fluidbetätigte Stellzylinder ausgebildet, wobei auch andere Aktuatoren wie ein elektrische Stellantrieb Einsatz finden können. Werden durch unterschiedliche Steuersignale die Aktuatoren 20, 21 so angesteuert, dass die Stellbewegungen 22, 23 unterschiedlich sind, so kommt es zu einer Veränderung eines Winkels 24 der Rotationsachse 16 der Anpresswalze 13 gegenüber der Rotationsachse 17 der Spindel 18. In Fig. 2 ist zur Verdeutlichung die um den Winkel 24 verschwenkte Rotationsachse mit einem deutlich übertrieben großen Winkel dargestellt. In Fig. 2 erfolgt eine Verschwenkung um eine Achse vertikal zur Zeichenebene um den Längsmittelpunkt der Anpresswalze 13 mit einer Verschwenkung im Uhrzeigersinn für den Fall, dass die Stellbewegung 23 größer ist als die Stellbewegung 22. Möglich ist aber auch, dass die Stellbewegungen 22, 23 den gleichen Betrag haben, aber gegenläufig sind.

Für eine Verschwenkung um den Winkel 24 wie in Fig. 2 dargestellt wird die Mantelfläche 14b der Spule 3b stärker komprimiert als die Mantelfläche 14a der Spule 3a. Die Kontaktlinien der Anpresswalze 13 mit den Mantelflächen 14a, 14b sind gegenüber der Rotationsachse 17 geneigt, sodass sich kegelstumpfförmige Mantelflächen 14a, 14b ergeben oder zumindest die Kontaktlinien zwischen der Anpresswalze 13 und den Spulen 3a, 3b auf einer Kegelstumpffläche liegen. Hierbei ist der größte Durchmesser des Kegelstumpfes der Spule 3b für den skizzierten Winkel 24 kleiner als der kleinste Durchmesser des Kegelstumpfes der Spule 3a. Dies hat zur Folge, dass der Radius 25b, mit welchem das Spulgut 2b auf die Spule 3b aufgewickelt wird, kleiner ist als der Radius 25a, mit welchem das Spulgut 2a auf die Spule 3a aufgewickelt wird. Somit nimmt die Spule 3b weniger Spulgut 2b ab als die Spule 3a Spulgut 2a abnimmt oder auch die Spule 3b abnehmen würde, wenn der Winkel 24 Null betragen würde. Dies hat zur Folge, dass sich die Länge des Spulguts 2b in dem Zuführweg 4b vergrößern kann, da kontinuierlich weiter, insbesondere ohne Veränderung der Geschwindigkeit, Spulgut 2b von der Bereitstellungsstation 6b bereitgestellt wird. Wird somit mit dem Tänzerarm 11b eine vergrößerte Spannung des Spulguts 2b festgestellt oder ergibt sich eine verringerte Länge des Spulguts 2b in dem Zuführweg 4b, die durch die Auslenkung des Tänzerarms 11 b erfasst wird, so kann die in Fig. 2 skizzierte Verschwenkung der Rotationsachse 16 um den Winkel 24 zu einem Ausgleich derart erfolgen, dass die Spannung des Spulguts 2b wieder auf das normale Maß reduziert wird oder der Veränderung der Auslenkung der Tänzerrolle 8b entgegengewirkt wird, was vorzugsweise über mehrere Wicklungen andauern kann. Entsprechendes gilt in umgekehrter Richtung für die Spannung und die Länge des Spulguts 2a in dem Zuführweg 4a, wobei hier infolge der Erhöhung des Radius 25a eine Erhöhung der Spannung des Spulguts 2a erfolgt oder eine Veränderung der Auslenkung der Tänzerrolle 8a in die andere Richtung erfolgt.

Vielfältige abgewandelte Ausführungsformen sind möglich. Beispielsweise kann der Aktuator 21 entfallen, während in diesem Endbereich die Anpresswalze 13 in einem Schwenklager gelagert ist, dessen Position an der Fadenleit- und Anpresseinheit 33 fest vorgegeben ist, welches aber eine Verschwenkung der Rotationsachse 16 um dieses Schwenklager ermöglicht. Für diese Ausgestaltung erfolgt mit Ansteuerung des einzigen Aktuators 20 und einer Stellbewegung 22 die Verschwenkung der Anpresswalze 13 um das Schwenklager mit hiermit einhergehender Veränderung des Winkels 24, welcher dann allerdings um das Schwenklager zu messen ist.

Für diese Ausführungsform und für andere Ausführungsformen kann eine ergänzende Beeinflussung der Spannung in dem Spulgut 2a, 2b oder der Auslenkungen der Tänzerrollen 8a, 8b erfolgen, indem eine Steuerung der Drehzahl der Spulen 3 bzw. Spindel 18 erfolgt. So ist beispielsweise für die Verwendung des lediglich einen Aktuators 20 wie beschrieben eine Verschwenkung der Rotationsachse 16 der Anpresswalze 13 damit verbunden, dass in beiden Zuführwegen 4a, 4b eine Erhöhung oder Verringerung der Spannung des Spulguts 2a, 2b erfolgt, allerdings in unterschiedlichem Ausmaß je nach Abstand der Changiereinrichtung von dem Schwenklager. In diesem Fall kann eine ergänzende überlagerte Beeinflussung durch die veränderte Drehzahl der Spulen 3a, 3b erfolgen.

Für das dargestellte Ausführungsbeispiel wird davon ausgegangen, dass die Spulen 3a, 3b gemeinsam mit derselben Drehzahl rotieren.

Für eine weitere Ausführungsform ist jeder Spule 3a, 3b eine einzelne Anpresswalze 13a, 13b zugeordnet, wobei diese beiden Anpresswalzen 13a, 13b dann jeweils über zwei Aktuatoren 20a, 21a sowie 20b, 21 b separat ansteuerbar sind. In diesem Fall muss nicht zwingend eine Winkeländerung der Anpresswalzen 13a, 13b herbeigeführt werden, wobei dies durchaus ebenfalls möglich wäre. Vielmehr erfolgt vorzugsweise eine Parallelverschiebung der Anpresswalzen 13a, 13b mit unterschiedlichen Abständen 15a, 15b der Anpresswalzen 13a, 13b von der Rotationsachse 17 zum Ausgleich der unterschiedlichen Spannungen in den Zuführwegen 4a, 4b. Hinsichtlich weiterer Details wird auf die konstruktiven Ausgestaltungen der Anpresswalzen, Aktuatoren, Freiheitsgrade und Lagerungen sowie Abstützungen gemäß DE 100 03 513 A1 verwiesen, welche sämtlich in die vorliegende Erfindung integriert werden können (mit dem gegenüber dem Stand der Technik veränderten Steuerungskonzept).

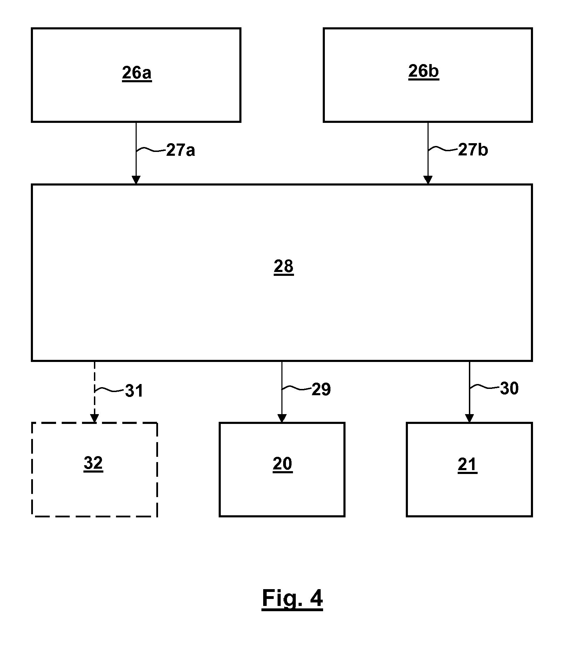

**Fig. 4** zeigt stark schematisiert ein erfindungsgemäßes Verfahren. Über Sensoren 26a, 26b wird jeweils die Spannung des Spulguts 2a, 2b oder werden die Auslenkungen der Tänzerrollen 8a, 8b in einem Zuführweg 4a, 4b erfasst. Hierbei können die Sensoren 26a, 26b beispielsweise den Schwenkwinkel der Tänzerarme 11a, 11 b erfassen. Alternativ möglich ist, dass eine Erfassung der Spannung des Spulguts 2a, 2b erfolgt über eine Abstützeinrichtung mit integriertem Sensor oder DMS entsprechend EP 1 190 974 B1 oder DE 10 2008 032 643 B3.

Messsignale 27a, 27b werden einer Steuereinheit 28 zugeführt, welche geeignete Steuersignale erzeugt, um einer Abweichung einer Spannung eines Spulguts 2a, 2b in einem Zuführweg 4a, 4b von einer Soll-Spannung oder einer Veränderung der Auslenkung der Tänzerrolle 8a, 8b entgegenzuwirken. Beispielsweise erzeugt die Steuereinheit 28 Steuersignale 29, 30, die die Aktuatoren 20, 21 (oder Aktuatoren 20a, 21 a, 20b, 21 b) ansteuern, um eine Veränderung eines Abstands 15 und/oder eine Veränderung des Winkels 24 auszusteuern. Gestrichelt dargestellt ist in Fig. 4 die ergänzende optionale Erzeugung eines Steuersignals 31 durch die Steuereinheit 28 zur Ansteuerung eines Antriebs 32 für die Spindel 18 bzw. die Spulen 3a, 3b.

Die aus dem eingangs genannten Stand der Technik bekannten Lösungen eignen sich nur bedingt zur Regelung einer im Prozess befindlichen Länge des Spulguts bzw. Spannung bei einem gleichzeitigen Aufwickeln von Spulgut 2a, 2b zu mehreren Spulen 3a, 3b auf einer einzigen Spindel 18. Bei zu großen Unterschieden in der Lauflänge des Spulguts werden sich zwangsläufig verschiedenen Spannungen des Spulguts 2a, 2b auf den einzelnen Spulen 3a, 3b einstellen und damit unterschiedliche Spuleneigenschaften ergeben. Im Extremfall kommt es schon während des Spulens zu Prozessfehlern, insbesondere weil ein Spulgut 2a, 2b nicht mehr geführt werden kann, weil die Spannung zu gering wird, oder es kommt zu Beschädigungen des Spulguts 2a, 2b durch eine zu hohe Spannung. Erfindungsgemäß erfolgt eine aktive Steuerung des Winkels 24 in der Einlaufebene für das Spulgut außerhalb der Parallelität zwischen Anpresswalze 13 und Spindel 18, womit eine Regelung der aufgenommenen Menge des Spulguts der verschiedenen Spulen 3a, 3b erfolgt. Durch die durch die Änderung des Winkels 24 hervorgerufene Verminderung des Anpressdrucks der Anpresswalze 13 auf eine oder mehrere Spulen 3a, 3b vermindert sich deren Dichte und vergrößert sich damit der Durchmesser der Spule 3a, 3b, was wiederum dazu führt, dass, bei gleicher Winkelgeschwindigkeit der Spulen 3a, 3b die aufgenommene Länge des Spulguts 2a, 2b regelbar ist. Umgekehrtes gilt entsprechend für Spulen, die einem erhöhten Anpressdruck ausgesetzt sind.

Zur Bestimmung der notwendigen Aufspulgeschwindigkeit wird an jedem zulaufenden Spulgut 2a, 2b fortlaufend die aktuelle Länge des Spulguts 2a, 2b, also eine Position einer Tänzerrolle 8a, 8b, ermittelt und der Steuereinheit 28 zugeführt. Dort werden diese Werte verglichen und es wird aufgrund der ermittelten Unterschiede eine Änderung des Winkels 24 der Anpresswalze 13 bezogen auf die Spindel 18 berechnet. Dieser berechnete Winkel 24 wird anschließend mittels eines oder mehrerer Aktuatoren 20, 21 direkt oder indirekt, beispielsweise über eine Hebelanordnung, an der Spulmaschine 1 umgesetzt. Dadurch wird der Abstand der Anpresswalze 13 zu den Spulen 3a, 3b mit größerer Länge des Spulguts 2a, 2b vergrößert und entsprechend der Abstand zu Spulen 3a, 3b mit kleinerer Länge des Spulguts 2a, 2b verkleinert. Denkbar ist auch ein Verfahren, bei dem für jede einzelne Spule 3a, 3b eine separate Anpresswalze 13a, 13b vorgesehen ist. In diesem Fall sind die einzelnen Anpresswalzen 13a, 13b jeweils parallel zur Spindel 18 orientiert mit steuerbarem Abstand zu der Spindel 18. Zeitgleich zur Regelung der Anpresswalze 13 oder der Anpresswalzen 13a, 13b kann aus den gemessenen Spannungen des Spulguts 2a, 2b durch eine Mittelwertbildung, eine anderweitige gewichtete Mittelwertbildung oder eine beliebige funktionale Abhängigkeit der Spannungen oder unter Auswertung der Unterschiede der Spannungen eine Soll-Drehzahl oder Änderung derselben für die Spindel 18 berechnet werden, sodass der Antrieb 32 entsprechend angesteuert werden kann.

Im Rahmen der vorliegenden Erfindung umfasst eine *"Veränderung der Anpresskraft*" eine Veränderung des Betrags der Anpresskraft und/oder eine Veränderung des Verlaufs der Anpresskraft über die Kontaktlinie oder -fläche der Anpresswalze mit der Mantelfläche der Spule(n).

Für das dargestellte Ausführungsbeispiel stützen sich die Aktuatoren 20, 21 in einem Endbereich an der Anpresswalze 13 ab, während der andere Endbereich an der Fadenleit- und Anpresseinheit 33 abgestützt ist. Für diese Ausführungsform ist die gesamte, auf die Spulen 3a, 3b ausgeübte resultierende Anpresskraft unabhängig von den Stellbewegungen 22, 23 -je nach Stellwinkel 24 kann aber die Aufteilung der Anpresskräfte auf die beiden Spulen 3a, 3b beeinflusst werden. Die resultierende Anpresskraft ist hierbei abhängig von dem Gewicht der Fadenleit- und Anpresseinheit 33 und/oder zusätzlicher, die Fadenleit- und Anpresseinheit 33 beaufschlagenden Aktuatoren, welche in den Figuren nicht dargestellt sind.

Theoretisch denkbar ist auch, dass die Aktuatoren 20, 21 oder zusätzliche Aktuatoren auf die Fadenleit- und Anpresseinheit 33 einwirken. In diesem Fall kann bei Stellbewegungen 22, 23 gleichen Betrags und gleichen Richtungssinns bei Beibehaltung der Parallelität der Rotationsachsen 16, 17 der Abstand 15 verändert werden, die Packungsdichte der Spulen 3a, 3b verändert werden und für beide Zuführwege 4a, 4b gleichzeitig die Spannung verändert werden oder eine gemeinsame Veränderung der Schwenkwinkel 10a, 10b der Tänzerarme 11a, 11b erfolgen. Falls ein entsprechender Freiheitsgrad konstruktiv vorgegeben ist, kann über eine Verkippung der Fadenleit- und Anpresseinheit 33 gemeinsam mit der Anpresswalze 13 um den Winkel 24 wie zuvor erläutert die Verteilung der Anpresskraft auf die Spulen 3a, 3b verändert werden. Durch eine überlagerte Veränderung des Abstands 15 einerseits und Veränderung des Winkels 24 kann sowohl ein Gleichanteil der veränderten Schwenkwinkel 10a, 10b sowie eine relative Änderung der Schwenkwinkel 10a, 10b ausgeglichen werden.

Wie zuvor erwähnt versteht sich, dass auch zwei separate Anpresswalzen 13a, 13b über Paare von Aktuatoren 20a, 21 a bzw. 20b, 21 b beaufschlagt werden können, die jeweils für eine Spule 3a, 3b zuständig sind. In diesem Fall stützen sich die Aktuatoren 20a, 20b, 21a, 21b vorzugsweise an der Fadenleit- und Anpresseinheit 33 ab. Hier kann eine separate Einstellung der Abstände 15a, 15b der Anpresswalzen 13a, 13b von der Rotationsachse 17 erfolgen, wobei auch hier alternativ oder zusätzlich der Winkel 24a, 24b der Anpresswalzen 13a, 13b beeinflusst werden kann.

### BEZUGSZEICHENLISTE

- 1: Spulmaschine
- 2: Spulgut
- 3: Spule
- 4: Zuführweg
- 5: Abgabegeschwindigkeit
- 6: Bereitstellungsstation
- 7: Umlenkrolle
- 8: Tänzerrolle
- 9: Umlenkrolle
- 10: Schwenkrichtung
- 11: Tänzerarm
- 12: Changierbewegung
- 13: Anpresswalze
- 14: Mantelfläche
- 15: Abstand
- 16: Rotationsachse
- 17: Rotationsachse
- 18: Spindel
- 19: Maschinenrahmen
- 20: Aktuator
- 21: Aktuator
- 22: Stellbewegung
- 23: Stellbewegung
- 24: Winkel
- 25: Radius
- 26: Sensor
- 27: Messsignal
- 28: Steuereinheit
- 29: Steuersignal
- 30: Steuersignal
- 31: Steuersignal
- 32: Antrieb
- 33: Fadenleit- und Anpresseinheit

## Patentansprüche

1. Verfahren zur Steuerung einer Spulmaschine (1) mit folgenden Verfahrensschritten:
a) paralleles Aufwickeln von kontinuierlich zulaufendem Spulgut (2a, 2b) zu zwei auf einer gemeinsamen Spindel (18) gelagerten und von der Spindel (18) angetriebenen Spulen (3a, 3b),
b) Erzeugen eines Steuersignals (29, 30, 31),
c) Beaufschlagen eines Aktuators (20, 21) mit dem Steuersignal (29, 30), wobei der Aktuator (20, 21) in Abhängigkeit des Steuersignals (29, 30) die Anpresskraft einer Anpresswalze (13) an mindestens eine Spule (3a, 3b) verändert, wobei
d) das Steuersignal (29, 30, 31) von einer Spannung des Spulguts (2a, 2b) und/oder mindestens einer Auslenkung einer Tänzerrolle (8a, 8b) derart abhängig ist, dass mit einer Veränderung der Anpresskraft einer Veränderung der Spannung des Spulguts (2a, 2b) und/oder einer Auslenkung mindestens einer Tänzerrolle (8a, 8b) entgegengewirkt wird, indem mit einer Veränderung der Anpresskraft eine Veränderung des Radius der Mantelfläche der mindestens einen Spule (3a, 3b) zumindest an der Stelle, an welcher das Spulgut (2a, 2b) auf die Spule (3a, 3b) gewickelt wird, bewirkt wird.

2. Verfahren nach Anspruch 1, **dadurch gekennzeichnet, dass** das Steuersignal (29, 30, 31) in Abhängigkeit von der Spannung des Spulguts (2a;2b) und/oder in Abhängigkeit einer Auslenkung einer Tänzerrolle (8a; 8b) durch eine Steuerlogik derart ermittelt wird, dass
a) im Fall, dass
aa) die Spannung des Spulguts (2a;2b) in einem Zuführweg (4a; 4b) zu einer der Spulen (3a; 3b) eine gewünschte oder vorbestimmte Spannung oder
ab) eine Auslenkung einer Tänzerrolle (8a, 8b) eine gewünschte oder vorbestimmte Auslenkung in einem Zuführweg (4a; 4b) zu einer der Spulen (3a; 3b) überschreitet, die Anpresskraft der Anpresswalze (13) an der zugeordneten Spule (3a;3b) erhöht wird, um den Radius einer äußeren Oberfläche der zugeordneten Spule (3a; 3b) an der Stelle, an welcher das Spulgut (2a, 2b) auf die Spule (3a, 3b) gewickelt wird, zu verringern,
und/oder
b) im Fall, dass
ba) die Spannung des Spulguts (2a;2b) in einem Zuführweg (4a; 4b) zu einer der Spulen (3a; 3b) eine gewünschte oder vorbestimmte Spannung oder
bb) eine Auslenkung einer Tänzerrolle (8a, 8b) eine gewünschte oder vorbestimmte Auslenkung in einem Zuführweg (4a; 4b) zu einer der Spulen (3a; 3b)
unterschreitet, die Anpresskraft der Anpresswalze (13) an der zugeordneten Spule (3a;3b) verringert wird, um den Radius einer äußeren Oberfläche der zugeordneten Spule (3a; 3b) an der Stelle, an welcher das Spulgut (2a, 2b) auf die Spule (3a, 3b) gewickelt wird, zu vergrößern.

3. Verfahren nach Anspruch 1 oder 2, **dadurch gekennzeichnet, dass** die Spannung in dem Spulgut (2a, 2b) über die Erfassung einer Beanspruchung einer Abstützeinrichtung einer Umlenkrolle (7a, 7b; 9a, 9b) für das Spulgut (2a, 2b) infolge der Spannung in dem Spulgut (2a, 2b) ermittelt wird.

4. Verfahren nach Anspruch 1 oder 2, **dadurch gekennzeichnet, dass** Spannungen in Spulgut (2a, 2b) und/oder Auslenkungen von Tänzerrollen (8a, 8b) jeweils in parallelen Zuführwegen (4a, 4b) zu den Spulen (3a, 3b) erfasst werden.

5. Verfahren nach einem der vorhergehenden Ansprüche, **dadurch gekennzeichnet, dass** die Drehzahl der Spulen (3a, 3b) in Abhängigkeit von der Spannung des Spulguts (2a, 2b) und/oder mindestens einer Auslenkung einer Tänzerrolle (8a, 8b) steuerbar ist.

6. Verfahren nach Anspruch 5 in Rückbeziehung auf Anspruch 4, **dadurch gekennzeichnet, dass** die Drehzahl der Spulen (3a, 3b) in Abhängigkeit von Spannungen in dem Spulgut (2a, 2b) und/oder in Abhängigkeit von Auslenkungen von Tänzerrollen (8a, 8b) gesteuert wird, die jeweils auf parallelen Zuführwegen (4a, 4b) des Spulguts (2a, 2b) zu den Spulen (3a, 3b) erfasst werden.

7. Verfahren nach Anspruch 6, **dadurch gekennzeichnet, dass** die Drehzahl der Spulen (3a, 3b) in Abhängigkeit eines Mittelwerts von Spannungen oder Auslenkungen von Tänzerrollen (8a, 8b) gesteuert wird, die jeweils auf parallelen Zuführwegen (4a, 4b) des Spulguts (2a, 2b) zu den Spulen (3a, 3b) erfasst werden.

8. Verfahren nach einem der vorhergehenden Ansprüche, **dadurch gekennzeichnet, dass** zumindest zwei Anpresswalzen (13a, 13b) vorhanden sind, wobei eine Veränderung der Anpresskraft durch ein durch den Aktuator (20, 21) veranlasstes Bewegen einer Anpresswalze (13a; 13b) radial zu einer Rotationsachse (17) der Spulen (3a, 3b) oder der Spindel (18) herbeigeführt wird.

9. Verfahren nach Anspruch 8, **dadurch gekennzeichnet, dass** bei unterschiedlichen Spannungen des Spulguts (2a, 2b) und/oder Auslenkungen von Tänzerrollen (8a, 8b) in Zuführwegen (4a, 4b) des Spulguts (2a, 2b) zu den Spulen (3a, 3b) eine Angleichung der Spannungen und/oder Auslenkungen erfolgt, indem
a) eine Anpresswalze (13a) zur Vergrößerung der Anpresskraft und zur Verringerung der Spannung und/oder Auslenkung der Tänzerrolle (8a) in dem zugeordneten Zuführweg (4a) radial zur Rotationsachse (17) der Spulen (3a) oder der Spindel (18) in Richtung der Spindel (18) bewegt wird,
b) während die andere Anpresswalze (13b) zur Verringerung der Anpresskraft und zur Vergrößerung der Spannung und/oder Auslenkung der Tänzerrolle (8b) in dem zugeordneten Zuführweg (4b) radial zur Rotationsachse (17) der Spulen (3a) oder der Spindel (18) von der Spindel (18) weg bewegt wird.

10. Verfahren nach einem der vorhergehenden Ansprüche, **dadurch gekennzeichnet, dass** eine Veränderung der Anpresskraft herbeigeführt wird durch eine durch den Aktuator (20, 21) veranlasste Veränderung eines Winkels (24) der Rotationsachse (16) der Anpresswalze (13) gegenüber der Rotationsachse (17) der Spulen (3a) oder der Spindel (18).

11. Spulmaschine (1) zum parallelen Aufwickeln kontinuierlich zulaufenden Spulguts (2a, 2b) zu Spulen (3a, 3b) mit
a) einer die Spulen (3a, 3b) antreibenden Spindel (18) mit zumindest zwei Spulstationen,
b) zumindest einer Anpresswalze (13),
c) mindestens einem Aktuator (20, 21),
ca) der über ein Steuersignal (29, 30) ansteuerbar ist,
cb) über den der Abstand (15) einer oder der Anpresswalze (13) von der Spindel (18), ein Winkel (24) der Anpresswalze (13) und/oder die Anpresskraft einer oder der Anpresswalze (13) an mindestens eine Spule (3a, 3b) veränderbar ist mit der Folge, dass sich der Radius ihrer Mantelfläche zumindest an der Stelle, an welcher das Spulgut (2a, 2b) auf die Spule (3a, 3b) aufgewickelt wird, verändert,
d) mindestens einem Sensor (26a, 26b) zur Erfassung einer Spannung im Spulgut (2a, 2b) und/oder zur Erfassung einer Auslenkung einer Tänzerrolle (8a, 8b) auf einem Zuführweg (4a, 4b) zu einer Spule (3a, 3b) in einer Spulstation,
e) einer Steuereinheit (28) mit Steuerlogik zur Steuerung der Spannung in dem Spulgut (2a, 2b) und/oder der Auslenkung mindestens einer Tänzerrolle (8a, 8b),
insbesondere Spulmaschine (1) zur Durchführung des Verfahrens gemäß einem der Ansprüche 1 bis 10,
wobei
f) die Steuereinheit (28) mit Steuerlogik ausgestattet ist, mittels welcher ein von einer Spannung in Spulgut (2a, 2b) und/oder einer Auslenkung einer Tänzerrolle (8a; 8b) abhängiges Steuersignal (29, 30) bestimmbar ist, welches mit der Ansteuerung des Aktuators (20, 21) einer Veränderung einer Spannung in dem Spulgut (2a, 2b) und/oder einer Auslenkung einer Tänzerrolle (8a; 8b) entgegenwirkt.

12. Spulmaschine (1) nach Anspruch 11, **dadurch gekennzeichnet, dass** jeweils ein Sensor (26a, 26b) in parallelen Zuführwegen (4a, 4b) von Spulgut (2a, 2b) zu den Spulstationen zur Erfassung der Spannung in dem Spulgut (2a, 2b) und/oder der Auslenkung einer Tänzerrolle (8a; 8b) angeordnet ist.

13. Spulmaschine (1) nach Anspruch 11 oder 12, **dadurch gekennzeichnet, dass** in mindestens einem Zuführweg (4a, 4b) eine Umlenkrolle (7a, 7b; 9a, 9b) für das Spulgut (2a, 2b) über eine Abstützeinrichtung abgestützt ist und als Sensor (20, 21) zur Erfassung einer Spannung des Spulguts (2a, 2b) ein Sensor (20, 21) eingesetzt ist, welcher eine Beanspruchung in Form einer Dehnung, einer Spannung oder einer Kraft in der Abstützeinrichtung infolge der Spannung in dem Spulgut (2a, 2b) erfasst.

14. Spulmaschine (1) nach Anspruch 12 oder 13, **dadurch gekennzeichnet, dass** die Steuereinheit (28) mit Steuerlogik ausgestattet ist, die ein Steuersignal (31) ermittelt, welches über eine Steuerleitung einem Antrieb (32) der Spulen (3a, 3b) zugeführt ist, wobei das Steuersignal (31) von den Messsignalen (27a, 27b) der Sensoren (26a, 26b), die die Spannungen und/oder Auslenkungen der Tänzerrollen (8a; 8b) jeweils auf parallelen Zuführwegen (4a, 4b) des Spulguts (2a, 2b) zu den Spulen (3a, 3b) erfassen, abhängig ist.

15. Spulmaschine (1) nach Anspruch 14, **dadurch gekennzeichnet, dass** die Steuereinheit (28) mit Steuerlogik ausgestattet ist, die das Steuersignal (31) in Abhängigkeit eines Mittelwerts von Spannungen oder Auslenkungen von Tänzerrollen (8a; 8b) bestimmt, die jeweils auf parallelen Zuführwegen (4a, 4b) des Spulguts (2a, 2b) zu den Spulen (3a, 3b) einer Spindel (18) erfasst werden.

16. Spulmaschine (1) nach einem der Ansprüche 11 bis 15, **dadurch gekennzeichnet, dass** zumindest zwei Anpresswalzen (13a, 13b) vorhanden sind, welche durch den Aktuator (20, 21) parallel zur Rotationsachse (17) der Spindel (18) oder der Spulen (3a, 3b) relativ zueinander verschiebbar sind.

17. Spulmaschine (1) nach einem der Ansprüche 11 bis 15, **dadurch gekennzeichnet, dass** ein Winkel (24) der Rotationsachse (16) der Anpresswalze gegenüber der Rotationsachse (17) der Spindel (18) oder der Spulen (3a, 3b) durch den Aktuator (20, 21) veränderbar ist.
